# EUROPEAN PATENT SPECIFICATION

(11) **EP 1 912 429 B1**
(45) Date of publication and mention of the grant of the patent: **29.12.2010**
(21) Application number: 07107876.0
(22) Date of filing: 10.05.2007
(51) Int. Cl.: H04N 5/225, H01M 2/10, H01M 2/34

(54) **Battery locking device and electronic appliance adopting the same**
Batterieverriegelungsvorrichtung und elektronisches Gerät damit
Dispositif de verrouillage de batterie et appareil électronique l'utilisant

(30) Priority: 10.10.2006 KR 20060098620
(43) Date of publication of application: 16.04.2008
(73) Proprietor: Samsung Electronics Co., Ltd., Suwon-si, Gyeonggi-do (KR)
(72) Inventor: Cho, Hwan-gyun, Gyeonggi-do (KR)
(74) Representative: Grünecker, Kinkeldey, Stockmair & Schwanhäusser Anwaltssozietät

(56) References cited:
- EP-A- 0 514 284
- EP-A- 1 081 776
- US-A1- 2004 214 077
- US-A1- 2006 141 343
- US-B1- 6 302 454

## Description

### BACKGROUND OF THE INVENTION

### 1. Field of the Invention

The present general inventive concept relates to a battery locking device and an electronic appliance adopting the same. More particularly, the present general inventive concept relates to a battery locking device and an electronic appliance adopting the same which can protect data being processed when a battery is removed from the appliance.

### 2. Description of the Related Art

Generally, an image capturing device, such as a camcorder, can record an image of a captured object on a recording medium such as a tape, hard disk, CD, memory card, and so forth, or reproduce the recorded image data. Recently, with the trend of miniaturization and light-weighting of image capturing devices, devices that can adopt disks or memory cards as recording media seizing the development of recording medium technology have been developed and produced. Such an image capturing device may be provided with a display unit in addition to a view finder through which a user looks to compose an image being captured. The display unit displays images being captured or images being reproduced.

Since such an image capturing device is typically carried by a user, it is used with a separate battery detachably mounted therein. If the power of the battery mounted in the device has been completely consumed, the battery can be replaced by a new charged battery.

For this, a battery locking device is provided. The existing battery locking structure generally has a locking member, provided in the main body of the appliance, for simply locking the battery, and a locking release button or a locking release knob for releasing the locking state of the locking member.

In the conventional battery locking structure as described above, however, if the locking release button or the locking release knob is manipulated by a careless user or mischievous child in a state that data storing or data reproduction is being performed in the device, the locking state of the battery is instantaneously released to turn off the power.

If the power is abruptly turned off as described above, a data processing unit, such as a recording head of a hard disk drive or an optical head of a disk drive, provided in the device abruptly stops its data processing operation, without first being safely returned to its original position. In addition, such abrupt power turn-off may cause the loss of data being processed.

EP-A-0514284 discloses a lighting apparatus for video cameras, wherein a lock leave and an elevating button are used to lock or release an Illumination unit. It is first necessary to push the lock lever downwards and, thereafter, the elevating button will be pushed in the inside of the camera.

US 2004/214077 A1 discloses a locking apparatus for a battery, wherein a button is pressed inwards against the force of a first pressing spring to permit sliding a battery locking member against the force of a second pressing spring.

US 2006/141343 A1 discloses a further locking mechanism for a battery, wherein first a button portion of a slide lock member is pushed against the force of a gimbal spring to permit sliding a battery locking member against the force of a torsion spring.

US 6,302,454 discloses a battery lock mechanism including a first sliding operation member and a second sliding operation member and a recording medium within a housing of a portable device. To prevent any information in a random access memory from being destroyed, a control unit is used, which will start storing information of the RAM, in a hard disk when the first operation for releasing the battery is started.

EP-A-1081778 discloses a method and an arrangement for anticipating this engagement movement of a battery pack. A corresponding locking device uses a latch, which is moved by a user. The latch has a tongue inserted in a recess, which will be removed from the recess to disengage the battery.

### SUMMARY OF THE INVENTION

The present invention provides an improved battery locking device and an electronic appliance adopting the same, which prevents a battery from being abruptly released from its locking state, and thus, reduces the loss of data being processed.

This object is solved by the features of the independent claims.

Advantages and embodiments are disclosed by the sub-claims.

The release knob may include a knob body, exposedly and slidably installed on an outer side of the case, and an operating member, movably installed on an inner side of the case and connected to the knob body to interlock with the locking member.

The second locking unit may include a restricting member capable of moving between a restriction position to restrict the movement of the release knob and a permission position to permit the movement of the release knob, together with the release knob, a pressing member to press the restricting member into the restriction position, and a stopper, provided on the case, to prevent the restricting member from moving together with the release knob in the restriction position.

The second locking unit may include a restricting member capable of moving between a restriction position to restrict the movement of the first locking unit and a permission position to permit the movement of the first locking unit, together with the first locking unit, a pressing member to press the restricting member into the restriction position, and a stopper, provided on the case, to prevent the restricting member from moving together with the first locking unit in the restriction position.

The battery locking device may include a battery mounting unit provided in the case, and a locking device to lock and release the battery mounted in the battery mounting unit through at least two operations.

The foregoing and/or other aspects and utilities of the present general inventive concept are also achieved by providing a battery locking device including a battery mounting unit provided in a case of an electronic appliance and a locking device including a first locking unit and a second locking unit to operate together to lock and release a battery mounted in the battery mounting unit through movement of both the first locking unit and the second locking unit.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

FIG. 1 is a block diagram schematically illustrating the construction of an electronic appliance according to an exemplary embodiment of the present general inventive concept;

FIG. 2 is a perspective view of an electronic appliance according to an exemplary embodiment of the present general inventive concept;

FIG. 3 is an exploded perspective view of a battery locking device according to an exemplary embodiment of the present general inventive concept;

FIG. 4 is a front view of a rear case illustrated in FIG. 3;

FIG. 5 is a perspective view of some constituent elements illustrated in FIG. 3;

FIG. 6A is a perspective view of a release knob in its initial position in the rear case;

FIG. 6B is a sectional view schematically illustrating a battery in a locked state in a battery mounting unit;

FIG. 7 is a perspective view of the release knob seen from the inside of the rear case illustrated in FIG. 6A;

FIGS. 8A, 8B, and 9 are perspective views of a release member in a permission position; and

FIGS. 10, 11A, and 11B are views of the battery in an unlocked state through the movement of the release knob.

Throughout the drawings, the same drawing reference numerals will be understood to refer to the same elements, features and structures.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

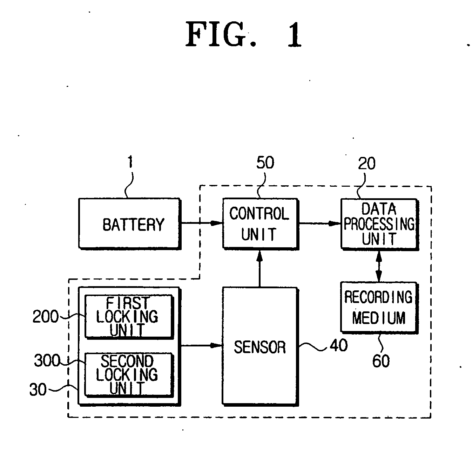

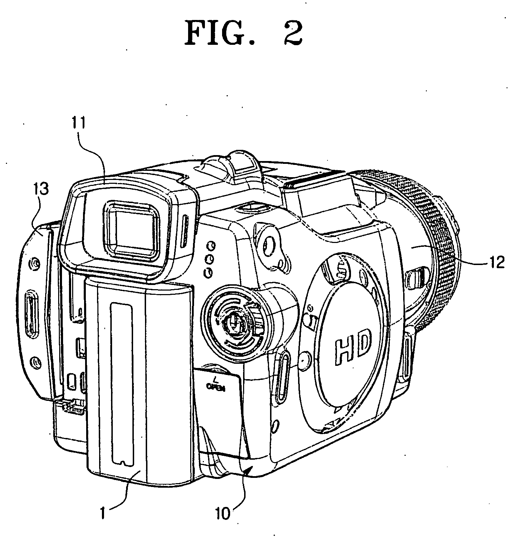

Referring to FIGS. 1 and 2, an electronic appliance according to an exemplary embodiment of the present general inventive concept may be an image capturing device that can capture an image, convert the captured image into a digital signal, and store the digital signal in a specified recording medium such as an HDD, an optical disk, a memory card, and so forth. The image capturing device can also reproduce the stored digital signal. The recording medium may be a cassette tape to store image information.

The electronic appliance is provided with a main body case 10, a data processing unit 20 provided in the case 10, a battery locking device 30 to mount and/or remove a battery 1 in and/or from the case 10, a sensor 40 to sense the time point of battery removing, a control unit 50 to control the operation of the data processing unit 20 on the basis of an output signal of the sensor 40, and a recording medium 60.

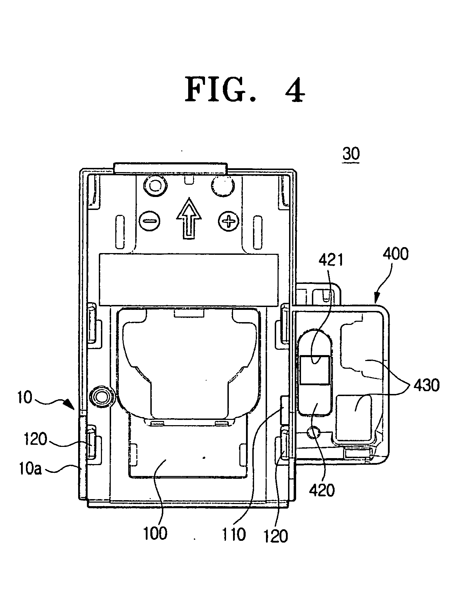

On the case 10, a view finder 11, a camera part 12, and a display panel 13 is provided. On the outside of the case 10, various kinds of manipulation buttons are provided. On the rear side of the case 10, i.e., in a rear case 10a (see FIG. 4) on which the view finder 11 is installed, the battery 1 is detachably mounted.

The data processing unit 20 is provided within the case 10, and may include a recording head to store and/or reproduce data to and/or from the recording medium 60, and an actuator to drive the recording head. Here, the recording medium 60 may include a hard disk drive (HDD), an optical disk, and a memory card, and in this case, the recording head may include a magnetic head, optical head, and so forth. The data processing unit 20 is driven when the power is supplied, and serves to store data including video information and sound information in the recording medium or to reproduce the stored data.

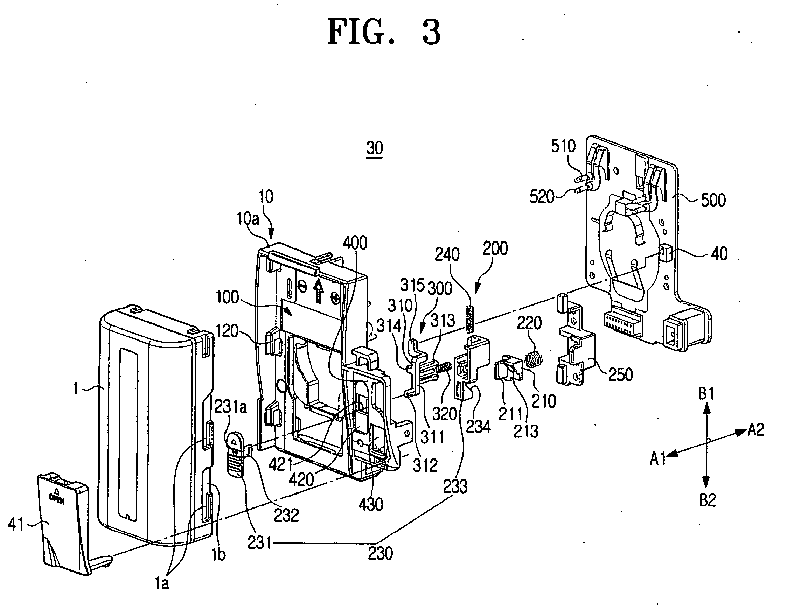

Referring to FIGS. 3 and 4, the battery locking device 30 is provided with a battery mounting unit 100 provided in the case 10, and a locking device to lock and release the battery mounted in the battery mounting unit 100 through at least two operations.

The battery mounting unit 100 is provided in the case 10, and more specifically, in the rear case 10a of the case 10, so that the battery 1 is accommodated and safely placed therein. The battery 1 is slidable into and mountable in the battery mounting unit 100, and is removable from the battery mounting unit 100. On the bottom surface of the battery mounting unit 100, a through-hole 110 (See FIG. 4), through which a locking member 210 extends and retracts, is formed. On a side wall of the battery mounting unit 100, a plurality of guide ribs 120 to guide the mounting of the battery 1 are provided. Also, on a specified part of the battery mounting unit 100, a plurality of power supply terminals are exposedly provided. The battery 1 is horizontally moved in a direction indicated by an arrow on the bottom surface of the battery mounting unit 100 to be mounted in the battery mounting unit 100, and is moved in an opposite direction to be removed from the battery mounting unit 100.

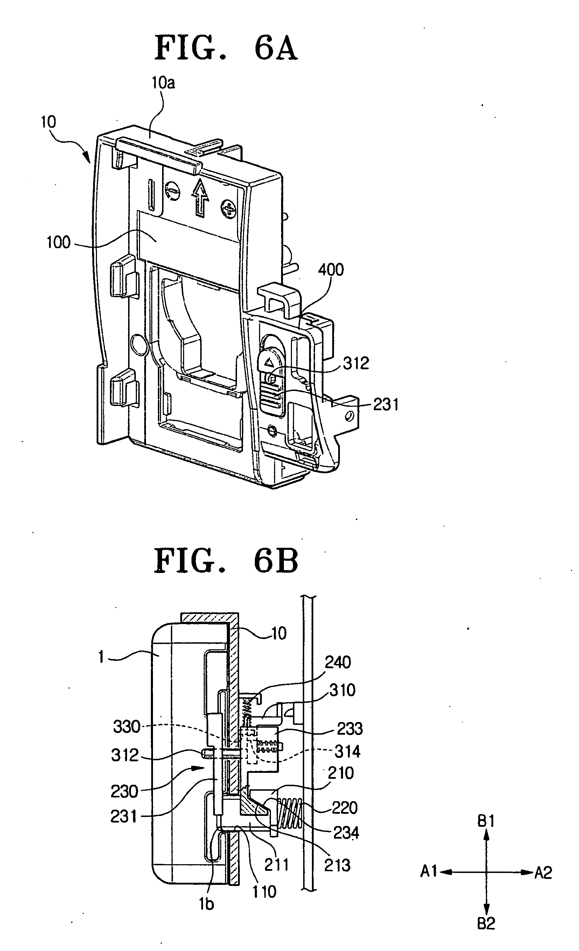

On the side surface of the battery 1, guide grooves 1a are formed to complementarily engage with the guide ribs 120. The locking member 210, having passed through the through-hole 110, enters into an entrance 1b of the guide groove 1a, into which the guide rib 120 enters, as illustrated in FIG. 6B, and thus the battery 1, when mounted in the battery mounting unit 100, is prevented from being removed from the battery mounting unit 100.

The locking device 30 is provided with a first locking unit 200 and a second locking unit 300. The first locking unit 200, as illustrated in FIG. 3, is provided with the locking member 210, a first pressing spring 220, a release knob 230, and a second pressing spring 240.

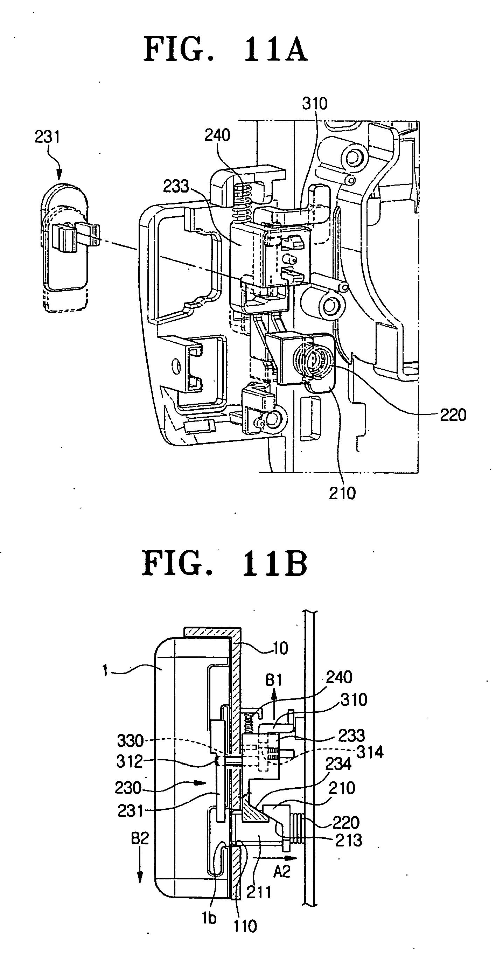

The locking member 210 is installed inside the case 10 so as to extend and retract in directions A1 and A2. Specifically, the locking member 210 is installed so as to be movable between a locking position (See FIG 6B) to lock the battery 1 (moved in the directionA1) and a release position (See FIG. 11B) to release the locking state of the battery 1 (moved in the direction A2). As illustrated in FIG. 6B, the locking position is the position in which a locking protrusion 211 of the locking member 210 protrudes toward the battery mounting unit 100 through the through-hole 110 of the battery mounting unit 100. The release position, as illustrated in FIG11B, is the position in which the locking member 210 retracts into the case 10 and the locking protrusion 211 is inserted into the through-hole 110 to be hidden. The locking member 210 has the locking protrusion 211 and a sliding surface 213 which is slantly formed adjacent to the locking protrusion 211. The sliding surface 213 comes into contact with the release knob 230 during the movement of the release knob 230. As the sliding surface 213 is slid on the release knob 230 to be pushed in the direction A2, it moves to the release position.

The first pressing spring 220 is a compression spring which resiliently presses the locking member 210 into the locking position, i.e., in the direction A1. One end of the first pressing spring 220 is connected to the locking member 210, and the other end thereof is supported by a support holder 250 linked to the inside of the case 10. The support holder 250 is linked to the inner surface of the case 10 and movably accommodates the locking member 210. This support holder 250 may be fixed to the inner surface of the case by fastening screws, or any other type of fasteners which will perform the intended operations as described above.

The release knob 230, as illustrated in FIGS. 3, 5, 6A, and 6B, is provided with a knob body 231 slidably installed on an outer side of the case 10, and an operation member 233 linked to the knob body 231 and installed inside the case 10 to move. Here, a manipulation unit 400 (See FIG. 4), in which the release knob 230 is movably installed, is provided adjacent to the battery mounting unit 100 in the case 10. The manipulation unit 400 is provided with a knob mounting groove 420 to mount the knob body 231, and a port hole 430 through which a connection port to connect to an external appliance is provided. The knob mounting groove 420 and the port hole 430 are covered by a cover member 41.

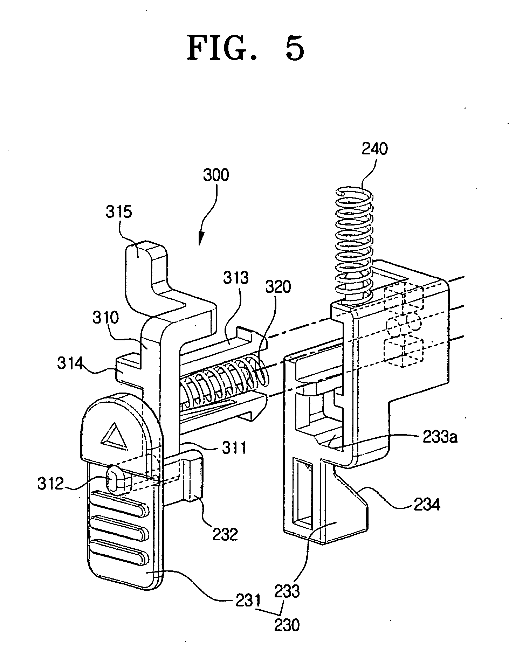

On the knob mounting groove 420, a hole 421 through which a hook 232 of the knob body 231 can pass is formed. The hook 232 of the knob body 231 is linked to a hook hole 233a provided in the operation member 233 as illustrated in FIG. 5. As described above, the knob body 231 and the operation member 233, which are linked together, move back and forth in first and second directions B1 and B2. The operation member 233 has a sliding surface 234 that corresponds to the sliding surface 213 of the locking member 210 so that it can intervene with the locking member 210 and move the locking member 210 to the release position (i.e., in the direction A2) as it moves in the first direction B1.

Referring to FIGS. 6B and 11B, if the release knob 230 moves in the direction B1, the locking member 210 retracts in the direction A2 due to the mutual intervention between the sliding surfaces 234 and 213, and thus the locking member 210 is removed from the battery 1 to move to the release position.

The second pressing spring 240 is a coil spring which resiliently presses the release knob 230 in the direction B2. When the first and second pressing spring 220 and 240 are released from their locking state, they are pushed by the release knob 230 having been moved in the first direction B1 and the locking member 210 having been moved in the direction A2, respectively, to become in a compressed state. Accordingly, if a user releases the release knob 230, having previously been moved in the direction B1, from his/her hand, the release knob 230 and the locking member 210 are returned to their original positions, respectively, by the restoring forces of the first and second pressing springs 220 and 240.

The second locking unit 300 is to restrict the movement of the first locking unit 200 to the release position, i.e., in the direction B1. The second locking unit 300 is provided with a restricting member 310 to restrict the movement of the release knob 230, a pressing member 320, and a stopper 330 (See FIGS. 6B, 7, and 8B).

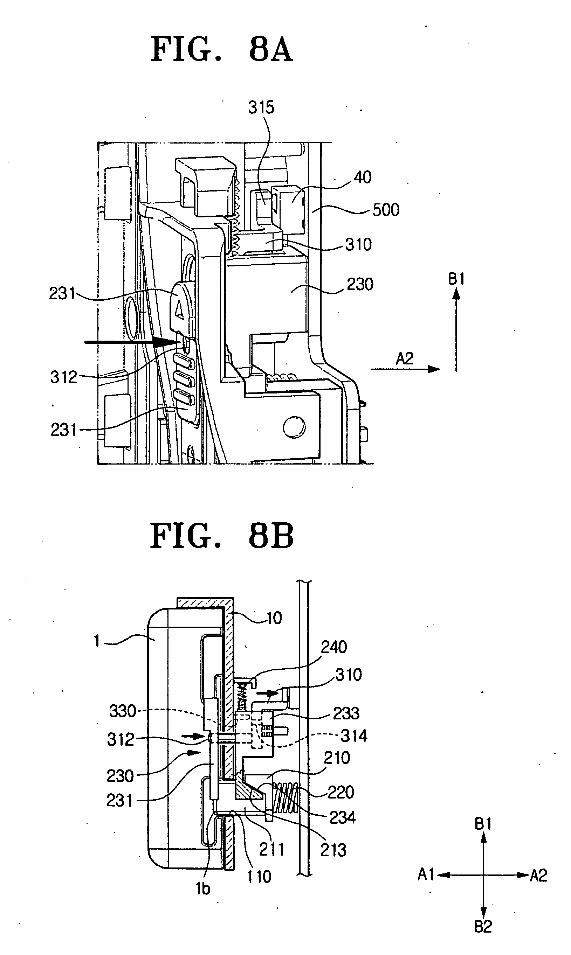

The restricting member 310 is movably supported by the release knob 230 between the restriction position to restrict the movement of the release knob 230 (See FIG. 6B) and the permission position to permit the movement of the release knob 230 (See FIG. 8B). As illustrated in FIG. 5, the restricting member 310 has a restriction protrusion 312 that protrudes from one side surface of its body 311 and engages with an engagement hole 231 a (See FIG. 3) of the knob body 231. On the other side surface of the body 311, a guide hook 313, hook-engaged with the operation member 233, to guide the movement of the operation member 233 in the directions A1 and A2, is provided. In addition, a locking protrusion 314 that corresponds to the stopper 330 (See FIGS. 6B and 8B) is formed on the body 311. On the opposite side of the body 311 from the side in which the restriction protrusion 312 is disposed, a sensor operating unit 315 to operate the sensor 40 is formed.

In the restricting member 310 as constructed above, the restriction protrusion 312 is engaged with the knob body 231, and the guide hook 313 is engaged with the operation member 233. The restricting member 310 is movable in the directions A1 and A2. When the restricting member 310 extends to the direction A1 as illustrated in FIGS. 6A and 6B, then the restricting member 310 is positioned in the restricting position. In this case, the restriction protrusion 312 protrudes into the knob body 231, and the locking protrusion 211 is positioned on the same line as the stopper 330 in the directions B1 and B2, so that they interrupt the movement of the release knob 230 in the direction B1.

In FIG 5, the pressing member 320 positions the restricting member 310 in the restricting position by pressing the restricting member 310 in the direction A1. This pressing member 320 is a compression spring interposed between the restricting member 310 and the operation member 233. By the pressing force of the pressing member 320, the restriction protrusion 312 of the restricting member 310 protrudes through the knob body 231 as illustrated in FIGS. 6A and 6B.

The stopper 330 protrudes from the inner surface of the case 10 at a specified height. This stopper 330 is positioned corresponding to the locking protrusion 314 of the restricting member 310, and prevents the restricting member 310, placed in the restricting position, from moving in the direction B1. In contrast, if the restricting member 310 is pushed in the direction A2 and moves to the permission position as illustrated in FIG. 8B, the locking protrusion 314 comes apart from the inner surface of the case 10, and thus is not locked by the stopper 330, and therefore moves in the direction B1. Accordingly, in the permission position, the restricting member 310 and the pressing member 320 become movable in the direction B1, together with the release knob 230.
On the other hand, if the restricting member 310 moves in the direction A2, as illustrated in FIGS. 8A and 8B, the operation unit 315 operates the sensor 40. The sensor 40 is a contact switch operated by the pressure of the operation unit 315, and a signal generated from the sensor 40 is transferred to the control unit 50. The sensor 40 is installed on a circuit board 500 (See FIG. 3) installed inside the case 10. A plurality of terminals 510 and 520 electrically connected to the battery 1 are provided on the circuit board 500.

Hereinafter, an effect of the electronic appliance as constructed above according to an exemplary embodiment of the present general inventive concept will be described in detail.

Although FIGS. 6A to 7 illustrate the battery mounting unit 100 in which no battery is mounted, an explanation will now be made on the assumption that the battery 1 is mounted and locked by the locking member 210.

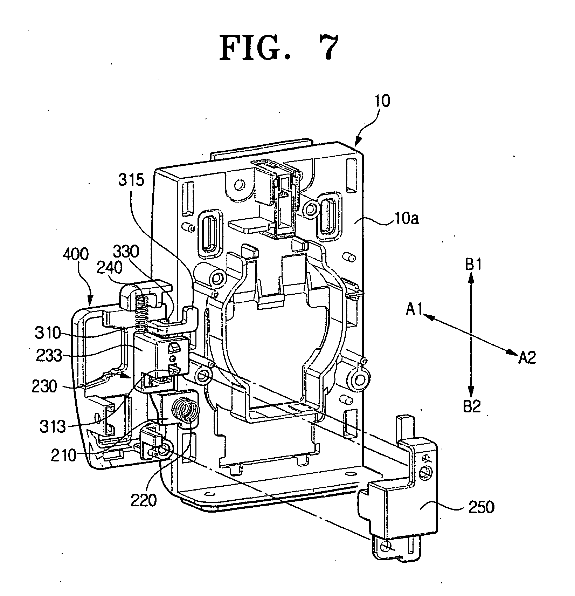

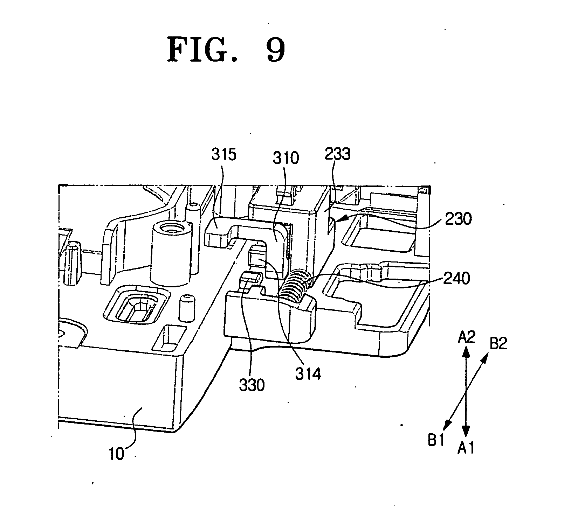

Referring to FIGS. 6A, 6B, and 7, when the battery 1 is mounted in the battery mounting unit 100, the entrance 1 b of the guide groove 1 a is locked by the locking member 210 positioned in the locking position, and the battery 1 is prevented from being removed in the direction B2. If it is desired to remove the battery in this state, as illustrated in FIGS. 8A, 8B, and 9, the restriction protrusion 312 of the restricting member 310 protruding into the knob body 231 is pressed by a user's hand. In this case, the restricting protrusion 310 is pushed in the direction A2 and moves to the permission position in which the movement of the release knob 230 is permitted. The sensor 40, i.e., a switch, is pressed by the operation unit 315 of the restricting member 310 having moved to the permission position, and thus is operated. The operation signal of the sensor 40 is transferred to the control unit 50.

The control unit 50 judges that the battery 1 will be shortly removed to cut off the power on the basis of the operation signal applied from the sensor 40, and controls the data processing unit 20 to complete its operation. That is, the data processing unit 20 stores data to be stored in the recording medium or data to be reproduced to prevent a data loss, and returns the recording head, actuator, and so forth, to their original positions to protect them from the power cutoff. As described above, since the time point of the battery removing can be known in advance before the first locking unit 200 to remove the battery 1 is operated, all the electronic and mechanical components of the electronic appliance including the data processing unit 20 can be returned to their original positions, or their operations can be stably completed. Accordingly, a data loss can be prevented and the electronic components can be prevented from being damaged.

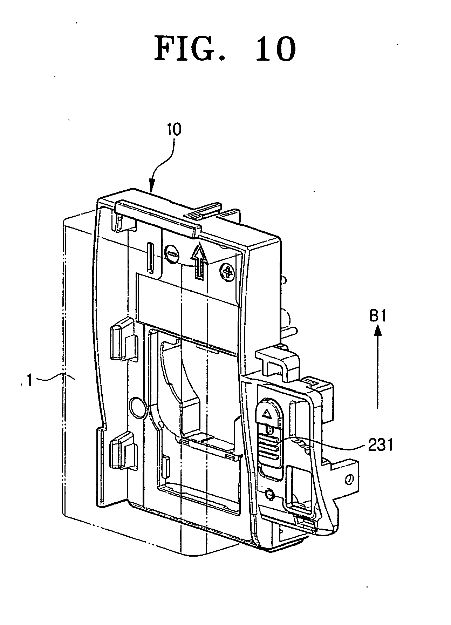

If the user pushes and moves the knob body 231 in the direction B1, as illustrated in FIG. 10, in a state that the user presses the restriction protrusion 312 having moved to the permission position as illustrated in FIGS. 8A, 8B, and 9, the sliding surface 213 of the locking member 210 is slid by the sliding surface 234 of the operation member 233 and is pushed in the direction A2, as illustrated in FIGS. 11A and 11B. Accordingly, the locking protrusion 211 of the locking member 210 escapes from the entrance 1 b of the guide groove formed on the battery 1, and thus the locking state of the battery is released. If the user pushes the released battery 1 in the direction B2, the battery is removed from the battery mounting unit 100.

If the user releases the knob body 231 being pushed after the battery 1 is removed, as illustrated in FIG. 11A, the locking member 210, the release knob 230, and the restricting member 310 are returned to their original positions by the restoring force of the first and second pressing springs 220 and 240.

As described above, according to the battery locking device and the electronic appliance adopting the same according to the present general inventive concept, the locking state of the battery is released through a plurality of operations, and thus the battery is prevented from being abruptly removed due to, for example, a user's mistake or a child's careless mischief.

In addition, by operating the second locking unit before the first locking unit and sensing in advance the time point of battery removing through the sensing of the operation of the second locking unit, in order to remove the battery, time for completing the process being performed in the electronic appliance, such as data storing or reproduction, can be secured, and thus a data loss can be prevented. Also, since the recording head to record the data can be returned to its initial safe position, the damage or trouble of the appliance can be reduced.

Although a few embodiments of the present general inventive concept have been shown and described, it will be appreciated by those skilled in the art that changes may be made in these embodiments without departing from the scope of the invention as defined in the appended claims and their equivalents.

## Claims

1. A battery locking device (30) comprising:
a battery mounting unit (100) provided in a case (10) of an electronic appliance, such as an image capturing device; and
a locking device (200, 300) to selectively lock and release a battery (1) mounted in the battery mounting unit through at least two operations,
wherein the locking device (200, 300) comprises: a first locking unit (200) to selectively lock and release the battery (1) mounted in the battery mounting unit (100) by directly intervening in the battery; and a second locking unit (300) to indirectly and selectively lock and release the battery (1) by restricting the movement of the first locking unit,
wherein the first locking unit (200) comprises: a battery locking member (210) capable of moving between a locking position to lock the battery (1) in the case (10) and a release position; a first pressing spring (220) to press the locking member (210) into the locking position; a release knob (230), slidably installed in the case (10), to move the locking member (210) to the release position when a user moves it in a first direction; and a second pressing spring (240) to press the release knob (230) in a second direction that is opposite to the first direction, and
wherein the release knob (230) and the battery locking member (210) have sliding surfaces (234, 213) to slide on each other to interlock with each other, so that when a user moves the release knob (230) in the first direction, the locking member (210) is moved to the release position and when the release knob (230) is moved in the second direction by the second pressing spring (240), the locking member (210) is moved to the locking position, by the first pressing spring (220).

2. The battery locking device of claim 1, wherein the release knob (230) comprises:
a knob body (231) exposedly and slidably installed on an outer side of the case (10); and
an operating member (233) movably installed on an inner side of the case (10) and connected to the knob body (231) to interlock with the locking member (210).

3. The battery locking device of claim 1, wherein the sliding surfaces (234, 213) of the release knob (230) and the battery locking member (210) are slantly formed.

4. The battery locking device of claim 1, wherein the second locking unit (300) comprises:
a restricting member (310) capable of moving between a restriction position to restrict the movement of the release knob (230) and a permission position to permit the movement of the release knob, together with the release knob;
a pressing member (320) to press the restricting member (310) into the restriction position; and
a stopper (330) provided on the case (10) to prevent the restricting member from moving together with the release knob in the restriction position.

5. The battery locking device of claim 1, wherein the second locking unit (300) comprises:
a restricting member (310) capable of moving between a restriction position to restrict the movement of the first locking unit (200) and a permission position to permit the movement of the first locking unit, together with the first locking unit;
a pressing member (320) to press the restricting member into the restriction position; and
a stopper (330) provided on the case to prevent the restricting member from moving together with the first locking unit in the restriction position.

6. An electronic appliance, such as an image capturing device, comprising:
a recording medium (60) provided in a case (10) of the electronic appliance;
a data processing unit (20) to record data on the recording medium or reproduce the recorded data;
a battery locking device (30) according to claim 1 to selectively lock and release a battery mounted in the case;
a sensor (40) to sense movement of the restricting member (310) from its restricting to its permission position which signals that the battery (1) shortly will be removed ; and
a control unit (50) to control completion of ongoing recording accesses of the data processing unit (20) prior to a loss of battery power according to a signal indicating battery removing, which is transferred from the sensor (40), and to store the processed data in the recording medium (60).

7. The electronic appliance of claim 6, wherein the release knob (230) comprises:
a knob body (231) exposedly and slidably installed on an outer side of the case (10); and
an operating member(233) movably installed on an inner side of the case (10) and connected to the knob body (231) to interlock with the locking member (210).

8. The electronic appliance of claim 6, wherein the sliding surfaces (234, 213) of the release knob (230)and the battery locking member (210) are slantly formed.

9. The electronic appliance of claim 6, wherein the second locking unit (300) comprises:
a restricting member (310) capable of moving between a restriction position to restrict the movement of the release knob (230) and a permission position to permit the movement of the release knob, together with the release knob;
a pressing member (320) to press the restricting member (310) into the restriction position; and
a stopper (330) provided on the case (10) to prevent the restricting member (310) from moving together with the release knob in the restriction position.

10. The electronic appliance of claim 9, wherein the sensor (40) comprises a switch to operate when the restriction member moves to the permission position.

11. The electronic appliance of claim 6, wherein the second locking unit (300) comprises:
a restricting member (310) capable of moving between a restriction position to restrict the movement of the first locking unit (200) and a permission position to permit the movement of the first locking unit, together with the first locking unit;
a pressing member (320) to press the restricting member into the restriction position; and
a stopper (330) provided on the case (1) to prevent the restricting member from moving together with the first locking unit in the restriction position.

12. The electronic appliance of claim 6, wherein the sensor (40) comprises a switch provided on a circuit board installed inside the case.

## Patentansprüche

1. Batteriearretiervorrichtung (30), die umfasst:
eine Batterieanbringungseinheit (100), die in einem Gehäuse (10) eines elektronischen Gerätes, wie beispielsweise einer Bilderfassungsvorrichtung, vorhanden ist; und
eine Arretiervorrichtung (200, 300) zum selektiven Arretieren und Freigeben einer in der Batterieanbringungseinheit angebrachten Batterie (1) über wenigstens zwei Vorgänge,
wobei die Arretiervorrichtung (200, 300) umfasst:
eine erste Arretiereinheit (200) zum selektiven Arretieren und Freigeben der in der Batterieanbringungseinheit (100) angebrachten Batterie (1) durch direktes Einwirken auf die Batterie; und eine zweite Arretiereinheit (300) zum indirekten und selektiven Arretieren und Freigeben der Batterie (1) durch Einschränken der Bewegung der ersten Arretiereinheit, wobei die erste Arretiereinheit (200) umfasst:
ein Batteriearretierelement (210), das in der Lage ist, sich zwischen einer Arretierposition zum Arretieren der Batterie (1) in dem Gehäuse (10) und einer Freigabeposition zu bewegen; eine erste Druckfeder (220) zum Drücken des Arretierelementes (210) in die Arretierposition; einen Freigabeknopf (230), der verschiebbar in dem Gehäuse (10) installiert ist, um das Arretierelement (210) an die Freigabeposition zu bewegen, wenn ein Benutzer ihn in einer ersten Richtung bewegt; und eine zweite Druckfeder (240) zum Drücken des Freigabeknopfes (230) in einer zweiten Richtung, die entgegengesetzt zu der ersten Richtung ist, und
wobei der Freigabeknopf (230) und das Batteriearretierelement (210) Gleitflächen (234, 213) aufweisen, die aufeinander gleiten und miteinander in Eingriff kommen, so dass, wenn ein Benutzer den Freigabeknopf (230) in der ersten Richtung bewegt, das Arretierelement (210) an die Freigabeposition bewegt wird, und wenn der Freigabeknopf (230) durch die zweite Druckfeder (240) in der zweiten Richtung bewegt wird, das Arretierelement (210) durch die erste Druckfeder (220) an die Arretierposition bewegt wird.

2. Batteriearretiervorrichtung nach Anspruch 1, wobei der Freigabeknopf (230) umfasst:
einen Knopf-Körper (231), der freiliegend und verschiebbar an einer Außenseite des Gehäuses (10) installiert ist; und
ein Betätigungselement (233), das beweglich an einer Innenseite des Gehäuses (10) installiert ist, und mit dem Knopf-Körper (231) verbunden ist, um mit dem Arretierelement (210) in Eingriff zu kommen.

3. Batteriearretiervorrichtung nach Anspruch 1, wobei die Gleitflächen (234, 213) des Freigabeknopfes (230) und des Batteriearretierelementes (210) schräg ausgebildet sind.

4. Batteriearretiervorrichtung nach Anspruch 1, wobei die zweite Arretiereinheit (300) umfasst:
ein Einschränkelement (310), das in der Lage ist, sich zusammen mit dem Freigabeknopf zwischen einer Einschränkposition zum Einschränken der Bewegung des Freigabeknopfes (230) und einer Zulassposition zum Zulassen der Bewegung des Freigabeknopfes zu bewegen;
ein Drückelement (320) zum Drücken des Einschränkelementes (310) an die Einschränkposition; und
einen Anschlag (330), der an dem Gehäuse (310) vorhanden ist, um zu verhindern, dass sich das Einschränkelement zusammen mit dem Freigabeknopf an die Einschränkposition bewegt.

5. Batteriearretiervorrichtung nach Anspruch 1, wobei die zweite Arretiereinheit (300) umfasst:
ein Einschränkelement (310), das in der Lage ist, sich zusammen mit der ersten Arretiereinheit zwischen einer Einschränkposition zum Einschränken der Bewegung der ersten Arretiereinheit (200) und einer Zulassposition zum Zulassen der Bewegung der ersten Arretiereinheit zu bewegen;
ein Drückelement (320) zum Drücken des Einschränkelementes (310) an die Einschränkposition; und
einen Anschlag (330), der an dem Gehäuse (310) vorhanden ist, um zu verhindern, dass sich das Einschränkelement zusammen mit der ersten Arretiereinheit an die Einschränkposition bewegt.

6. Elektronisches Gerät, wie beispielsweise eine Bilderfassungsvorrichtung, das umfasst:
ein Aufzeichnungsmedium (60), das in einem Gehäuse (10) des elektronischen Gerätes vorhanden ist;
eine Datenverarbeitungseinheit (20) zum Aufzeichnen von Daten auf das Aufzeichnungsmedium oder zum Wiedergeben der aufgezeichneten Daten;
eine Batteriearretiervorrichtung (30) nach Anspruch 1 zum selektiven Arretieren und Freigeben einer in dem Gehäuse angebrachten Batterie;
einen Sensor (40) zum Erfassen von Bewegung des Einschränkelementes (310) aus seiner Einschränkposition an seine Zulassposition, die signalisiert, dass die Batterie (1) in Kürze entnommen wird; und
eine Steuereinheit (50) zum Steuern von Abschluss laufender Aufzeichnungszugriffe der Datenverarbeitungseinheit (20) vor Verlust von Batteriestrom entsprechend einem Signal, das Entnahme der Batterie anzeigt und von dem Sensor (40) übertragen wird, und zum Speichern der verarbeiteten Daten in dem Aufzeichnungsmedium (60).

7. Elektronisches Gerät nach Anspruch 6, wobei der Freigabeknopf (230) umfasst:
einen Knopf-Körper (231), der freiliegend und verschiebbar an einer Außenseite des Gehäuses (10) installiert ist; und
ein Betätigungselement (233), das beweglich an einer Innenseite des Gehäuses (10) installiert ist, und mit dem Knopf-Körper (231) verbunden ist, um mit dem Arretierelement (210) in Eingriff zu kommen.

8. Elektronisches Gerät nach Anspruch 6, wobei die Gleitflächen (234, 213) des Freigabeknopfes (230) und des Batteriearretierelementes (210) schräg ausgebildet sind.

9. Elektronisches Gerät nach Anspruch 6, wobei die zweite Arretiereinheit (300) umfasst:
ein Einschränkelement (310), das in der Lage ist, sich zusammen mit dem Freigabeknopf zwischen einer Einschränkposition zum Einschränken der Bewegung des Freigabeknopfes (230) und einer Zulassposition zum Zulassen der Bewegung des Freigabeknopfes zu bewegen;
ein Drückelement (320) zum Drücken des Einschränkelementes (310) an die Einschränkposition; und
einen Anschlag (330), der an dem Gehäuse (310) vorhanden ist, um zu verhindern, dass sich das Einschränkelement zusammen mit dem Freigabeknopf an die Einschränkposition bewegt.

10. Elektronisches Gerät nach Anspruch 9, wobei der Sensor (40) einen Schalter umfasst, der betätigt wird, wenn sich das Einschränkelement an die Zulassposition bewegt.

11. Elektronisches' Gerät nach Anspruch 6, wobei die zweite Arretiereinheit (300) umfasst:
ein Einschränkelement (310), das in der Lage ist, sich zusammen mit der ersten Arretiereinheit zwischen einer Einschränkposition zum Einschränken der Bewegung der ersten Arretiereinheit (200) und einer Zulassposition zum Zulassen der Bewegung der ersten Arretiereinheit zu bewegen;
ein Drückelement (320) zum Drücken des Einschränkelementes (310) an die Einschränkposition; und
einen Anschlag (330), der an dem Gehäuse (310) vorhanden ist, um zu verhindern, dass sich das Einschränkelement zusammen mit der ersten Arretiereinheit an die Einschränkposition bewegt.

12. Elektronisches Gerät nach Anspruch 6, wobei der Sensor (40) einen Schalter umfasst, der auf einer Leiterplatte vorhanden ist, die im Inneren des Gehäuses installiert ist.

## Revendications

1. Dispositif de verrouillage de batterie (30), comprenant :
une unité de montage de batterie (100) agencée dans un boîtier (10) d'un appareil électronique, tel qu'un dispositif de capture d'image ; et
un dispositif de verrouillage (200, 300) pour verrouiller et libérer une batterie (1) de manière sélective, monté dans l'unité de montage de batterie en au moins deux opérations,
dans lequel le dispositif de verrouillage (200, 300) comprend : une première unité de verrouillage (200) pour verrouiller et libérer de manière sélective la batterie (1) montée dans l'unité de montage de batterie (100), en intervenant directement dans la batterie ; et une seconde unité de verrouillage (300) pour verrouiller et libérer la batterie (1) de manière indirecte et sélective, en limitant le déplacement de la première unité de verrouillage,
dans lequel la première unité de verrouillage (200) comprend : un élément de verrouillage de batterie (210) pouvant se déplacer entre une position de verrouillage pour verrouiller la batterie (1) dans le boîtier (10) et une position de libération ; un premier ressort de pression (220) pour pousser l'élément de verrouillage (210) en position de verrouillage ; une protubérance de libération (230) installée de façon coulissante dans le boîtier (10) pour déplacer l'élément de verrouillage (210) en position de libération lorsqu'un utilisateur le déplace dans une première direction ; et un second ressort de pression (240) pour pousser la protubérance de libération (230) dans une seconde direction, opposée à la première direction, et
dans lequel la protubérance de libération (230) et l'élément de verrouillage de batterie (210) comportent des surfaces de glissement (234, 213) pour glisser l'une sur l'autre de façon à s'emboîter, de telle manière que lorsqu'un utilisateur déplace la protubérance de libération (230) dans la première direction, l'élément de verrouillage (210) est déplacé en position de libération, et lorsque la protubérance de libération (230) est déplacée dans la seconde direction par le second ressort de pression (240), l'élément de verrouillage (210) est déplacé en position de verrouillage par le premier ressort de pression (220).

2. Dispositif de verrouillage de batterie selon la revendication 1, dans lequel la protubérance de libération (230) comprend :
un corps de protubérance (231) installé de manière exposée et coulissante sur un côté externe du boîtier (10) ; et
un élément d'actionnement (233) installé de manière mobile sur un côté interne du boîtier (10) et connecté au corps de la protubérance (231) pour s'emboîter avec l'élément de verrouillage (210).

3. Dispositif de verrouillage de batterie selon la revendication 1, dans lequel les surfaces de glissement (234, 213) de la protubérance de libération (230) et de l'élément de verrouillage de batterie (210) ont une forme inclinée.

4. Dispositif de verrouillage de batterie selon la revendication 1, dans lequel la seconde unité de verrouillage (300) comprend :
un élément de limitation (310) capable de se déplacer entre une position de limitation pour limiter le déplacement de la protubérance de libération (230) et une position de permission pour permettre le déplacement de la protubérance de libération, conjointement avec la protubérance de libération ;
un élément de pression (320) pour pousser l'élément de limitation (310) en position de limitation ; et
une butée (330) agencée sur le boîtier (10) pour éviter à l'élément de limitation de se déplacer conjointement avec la protubérance de libération en position de limitation.

5. Dispositif de verrouillage de batterie selon la revendication 1, dans lequel la seconde unité de verrouillage (300) comprend :
un élément de limitation (310) capable de se déplacer entre une position de limitation pour limiter le déplacement de la première unité de verrouillage (200) et une position de permission pour permettre le déplacement de la première unité de verrouillage, conjointement avec la première unité de verrouillage ;
un élément de pression (320) pour pousser l'élément de limitation en position de limitation ; et
une butée (330) agencée sur le boîtier pour éviter à l'élément de limitation de se déplacer conjointement avec la première unité de verrouillage en position de limitation.

6. Appareil électronique, tel qu'un dispositif de capture d'image, comprenant :
un support d'enregistrement (60) agencé dans un boîtier (10) de l'appareil électronique ;
une unité de traitement de données (20) pour enregistrer des données sur le support d'enregistrement ou pour restituer les données enregistrées ;
un dispositif de verrouillage de batterie (30) selon la revendication 1 pour verrouiller et libérer de manière sélective une batterie montée dans le boîtier ;
un capteur (40) pour détecter le déplacement de l'élément de limitation (310) entre ses positions de limitation et de permission, qui signale que la batterie (1) va bientôt être enlevée ; et
une unité de contrôle (50) pour contrôler l'achèvement d'accès d'enregistrement en cours de l'unité de traitement de données (20) avant une perte de puissance de batterie conformément à un signal indiquant l'enlèvement de la batterie, qui est transféré à partir du capteur (40), et pour stocker les données traitées sur le support d'enregistrement (60).

7. Appareil électronique selon la revendication 6, dans lequel la protubérance de libération (230) comprend :
un corps de protubérance (231) installé de manière exposée et coulissante sur un côté externe du boîtier (10) ; et
un élément d'actionnement (233) installé de manière mobile sur un côté interne du boîtier (10) et connecté au corps de la protubérance (231) pour s'emboîter avec l'élément de verrouillage (210).

8. Appareil électronique selon la revendication 6, dans lequel les surfaces de glissement (234, 213) de la protubérance de libération (230) et de l'élément de verrouillage de batterie (210) ont une forme inclinée.

9. Appareil électronique selon la revendication 6, dans lequel la seconde unité de verrouillage (300) comprend :
un élément de limitation (310) capable de se déplacer entre une position de limitation pour limiter le déplacement de la protubérance de libération (230) et une position de permission pour permettre le déplacement de la protubérance de libération, conjointement avec la protubérance de libération ;
un élément de pression (320) pour pousser l'élément de limitation (310) en position de limitation ; et
une butée (330) agencée sur le boîtier (10) pour éviter à l'élément de limitation (310) de se déplacer conjointement avec la protubérance de libération en position de limitation.

10. Appareil électronique selon la revendication 9, dans lequel le capteur (40) comprend un interrupteur qui s'actionne lorsque l'élément de limitation se déplace vers la position de permission.

11. Appareil électronique selon la revendication 6, dans lequel la seconde unité de verrouillage (300) comprend :
un élément de limitation (310) capable de se déplacer entre une position de limitation pour limiter le déplacement de la première unité de verrouillage (200) et une position de permission pour permettre le déplacement de la première unité de verrouillage, conjointement avec la première unité de verrouillage ;
un élément de pression (320) pour pousser l'élément de limitation en position de limitation ; et
une butée (330) agencée sur le boîtier (1) pour éviter à l'élément de limitation de se déplacer conjointement avec la première unité de verrouillage en position de limitation.

12. Appareil électronique selon la revendication 6, dans lequel le capteur (40) comprend un interrupteur agencé sur un circuit imprimé installé à l'intérieur du boîtier.
